Europäisches Patentamt

European Patent Office

Office européen des brevets

(19)

(11) Veröffentlichungsnummer : **0 052 265**
**B1**

(12) **EUROPÄISCHE PATENTSCHRIFT**

(45) Veröffentlichungstag der Patentschrift :
05.03.86

(21) Anmeldenummer : **81108934.1**

(22) Anmeldetag : **26.10.81**

(51) Int. Cl.⁴ : **H 01 M   8/04**

(54) **Elektrische Gleichstromquelle.**

(30) Priorität : **19.11.80 DE 3043692**

(43) Veröffentlichungstag der Anmeldung :
**26.05.82 Patentblatt 82/21**

(45) Bekanntmachung des Hinweises auf die Patenterteilung : **05.03.86 Patentblatt 86/10**

(84) Benannte Vertragsstaaten :
**CH FR GB IT LI NL SE**

(56) Entgegenhaltungen :
**DE-A- 1 907 737**
**FR-A- 1 532 702**
**FR-A- 2 063 971**
**FR-A- 2 106 977**
**US-A- 3 404 529**
**US-A- 3 419 779**
**US-A- 4 310 605**
**PROCEEDINGS OF THE FOURTH INTERSOCIETY ENERGY CONVERSION ENGINEERING CONFERENCE, 22.-26. September 1969, Seiten 74-83, Washington, D.C., USA D.L. DAUBERT et al.: "Power systems for the apollo applications program"**

(73) Patentinhaber : **Siemens Aktiengesellschaft**
**Berlin und München Wittelsbacherplatz 2**
**D-8000 München 2 (DE)**

**Ingenieurkontor Lübeck, Prof. Gabler Nachf. GmbH**
**Postfach 1690**
**D-2400 Lübeck (DE)**

(72) Erfinder : **Gutbier, Heinrich, Dr.**
**Auf der Höhe 7**
**D-8551 Röttenbach (DE)**
Erfinder : **Limberg, Elmar**
**Borkumstrasse 6**
**D-2400 Lübeck (DE)**
Erfinder : **Strasser, Karl, Dipl.-Ing.**
**Leipziger Strasse 79**
**D-8520 Erlangen (DE)**
Erfinder : **Jensen, Volker**
**Kählsdorfer Weg 2**
**D-2401 Krummesse (DE)**

(74) Vertreter : **Mehl, Ernst, Dipl.-Ing. et al**
**Postfach 22 01 76**
**D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine elektrische Gleichstromquelle mit in Reihe oder in Reihe und parallel geschalteten Brennstoffzellen oder Brennstoffbatterien.

Für Gleichstromantriebe ist es allgemein bekannt, Batterien elektrisch in Reihe und/oder parallel zu schalten, um die Spannung zu ändern. Dasselbe gilt auch für Brennstoffzellen bzw. Brennstoffbatterien, d. h. Batterien aus mehreren einzelnen Brennstoffzellen oder Gruppen von Brennstoffzellen. Brennstoffzellen sind elektrochemische Anordnungen, in denen die freie Enthalpie der Oxidation eines Brennstoffes direkt in elektrische Energie umgewandelt wird und die Reaktionspartner, d. h. Brennstoff und Oxidationsmittel, der Zelle kontinuierlich zugeführt werden (vgl. : F. v. Sturm, « Elektro-chemische Stromerzeugung », Verlag Chemie, 1969, Seite 61 ff.) ; im allgemeinen werden dabei gasförmige Reaktanten eingesetzt, wie Wasserstoff und Sauerstoff bzw. Luft.

Die Serien- bzw. Parallelschaltung erfolgt bei Batterien der genannten Art meistens mittels mechanischer Schaltanlagen, die aber geräuschintensiv sind und damit eine gewisse Umweltbelastung darstellen. Zur Schaltung kann zwar auch eine Leistungselektronik, wie Thyristorschalter und/oder Gleichstromsteller, verwendet werden, diese ist aber relativ großvolumig und darüber hinaus auch nicht ganz frei von Geräuschen.

Aufgabe der Erfindung ist es, eine elektrische Gleichstromquelle mit in Reihe oder in Reihe und parallel geschalteten Brennstoffzellen oder Brennstoffbatterien in der Weise auszugestalten, daß sowohl ein geräuscharmer Betrieb ermöglicht wird als auch auf eine voluminöse Leistungselektronik verzichtet werden kann.

Dies wird erfindungsgemäß dadurch erreicht, daß jede Brennstoffzelle bzw. Brennstoffbatterie eine eigene Gasversorgung aufweist und in allen Gasversorgungsleitungen steuerbare Ventile angeordnet sind und daß jeweils gleichpolige Ausgänge der in Reihe geschalteten Brennstoffzellen bzw. Brennstoffbatterien über ein elektrisches Ventil mit einer gleichnamigen Sammelschiene verbunden sind.

Bei der erfindungsgemäßen Gleichstromquelle, bei der mechanische Schaltgeräusche vermieden werden, erfolgt die Steuerung der Ausgangsspannung durch sogenanntes gasseitiges Schalten. Dazu wird die Gaszufuhr zu einzelnen Brennstoffzellen bzw. Brennstoffbatterien, unabhängig von der Zufuhr zu den anderen Zellen oder Batterien, entsprechend dem Bedarf an elektrischer Energie geregelt. Die geräuschlose Spannungseinstellung erfolgt durch Steuerung der — relativ kleinen — (Reaktanten-) Ventile in den Gasversorgungsleitungen. Die Schaltung erfolgt dabei ausschließlich gasseitig, d. h. elektrisch bleiben die Zellen bzw. Batterien stets angeschlossen.

Die erfindungsgemäße Gleichstromquelle eignet sich insbesondere als elektrischer Antrieb. Daneben kommt diese Gleichstromquelle auch für andere Verwendungszwecke in Betracht, beispielsweise bei Schweißanlagen oder zum Laden von Batterien.

Bei der Verwendung als elektrischer Antrieb, wobei durch das gasseitige Schalten eine Leistungs- bzw. Drehzahlregelung erfolgt, bietet die erfindungsgemäße Vorrichtung insbesondere folgende Vorteile :

Geräuschlose stufenweise Spannungsänderung in großen Stellbereichen ohne Beteiligung von lauten Gleichstromleistungsschaltern oder ähnlichen Einrichtungen bzw. aufwendigen steuerbaren leistungselektronischen Betriebsmitteln ;

geräuschloses Stillsetzen von Brennstoffzellenanlagen derart, daß im vorwiegend benutzten unteren Drehzahlbereich die an der Energieabgabe beteiligten Brennstoffzellen bzw. Brennstoffbatterien in ihrem Wirkungspgradoptimum betrieben werden (das Wirkungsgradoptimum liegt bei Brennstoffzellen und Brennstoffbatterien im übrigen bei einem Lastfaktor von etwa 30 %, wobei ein Wirkungsgrad von über 60 % erreicht werden kann) ;

Lebensdauerverlängerung für Brennstoffzellenanlagen, die dadurch erwirkt wird, daß für vorwiegend benutzte Drehzahlen im unteren Bereich energetisch nicht benötigte Zellen und Batterien nicht aktiviert sind bzw. teilweise per Steuerprogramm auch andere Brennstoffzellen und Brennstoffbatterien für die gleiche Betriebsdrehzahl herangezogen werden (Betriebsstundenausgleich).

Die erfindungsgemäße Gleichstromquelle eignet sich vorteilhaft zum elektrischen Antrieb von Schiffen, insbesondere von Unterwasserfahrzeugen. Hierbei ist es von besonderem Vorteil, daß jeweils nur soviele Brennstoffzellen bzw. Brennstoffbatterien in Betrieb genommen werden müssen, wie zur Erzeugung der notwendigen Antriebsenergie erforderlich sind. Auf diese Weise werden die den Zellen bzw. Batterien zugeführten Gase optimal genutzt, ebenso wie die erzeugte Energie. Bei Unterwasserfahrzeugen ergibt sich — neben der geräuscharmen Drehzahleinstellung — aufgrund der Verwendung von Brennstoffzellen bzw. Brennstoffbatterien ferner der Vorteil eines außenluftunabhängigen Betriebes.

Bei der erfindungsgemäßen Vorrichtung können die in den elektrischen Ausgängen der Zellen bzw. Batterien angeordneten elektrischen Ventile als Dioden ausgebildet sein. Dadurch ist eine Erhöhung bzw. Verminderung der Fahrtstufe des Antriebes ohne eine steuerbare Leistungselektronik möglich.

Die elektrischen Ventile können aber auch steuerbar ausgebildet sein, was insbesondere für Anlaßvorgänge von Bedeutung ist. Beim Anfahren von Motoren können nämlich sehr hohe Ströme entstehen, die unter Umständen eine Überlastung der Brennstoffzellen bzw. Brennstoffbatterien hervorrufen können. Bei der Verwendung steuerbarer Ventile kann eine derartige Überlastung vermieden und ein « weiches » Anfahrverhalten erreicht werden.

Im übrigen kann das elektrische Anfahrverhalten auch in der Weise beeinflußt werden, daß nach dem Öffnen der Reaktantenventile eine definierte Reaktantendrucksteuerung erfolgt, wobei insbesondere der Druck auf der Sauerstoffseite langsam auf den eigentlichen Betriebsdruck gebracht wird.

Anhand von Ausführungsbeispielen und drei Figuren soll die Erfindung noch näher erläutert werden.

Es zeigt

Figur 1 den Aufbau einer Ausführungsform der erfindungsgemässen elektrischen Gleichstromquelle für einen Schiffsantrieb,

Figur 1A einen Ausschnitt aus Fig. 1 und

Figur 2 den Aufbau einer Ausführungsform der erfindungsgemässen elektrischen Gleichstromquelle zum Laden von Sekundärbatterien.

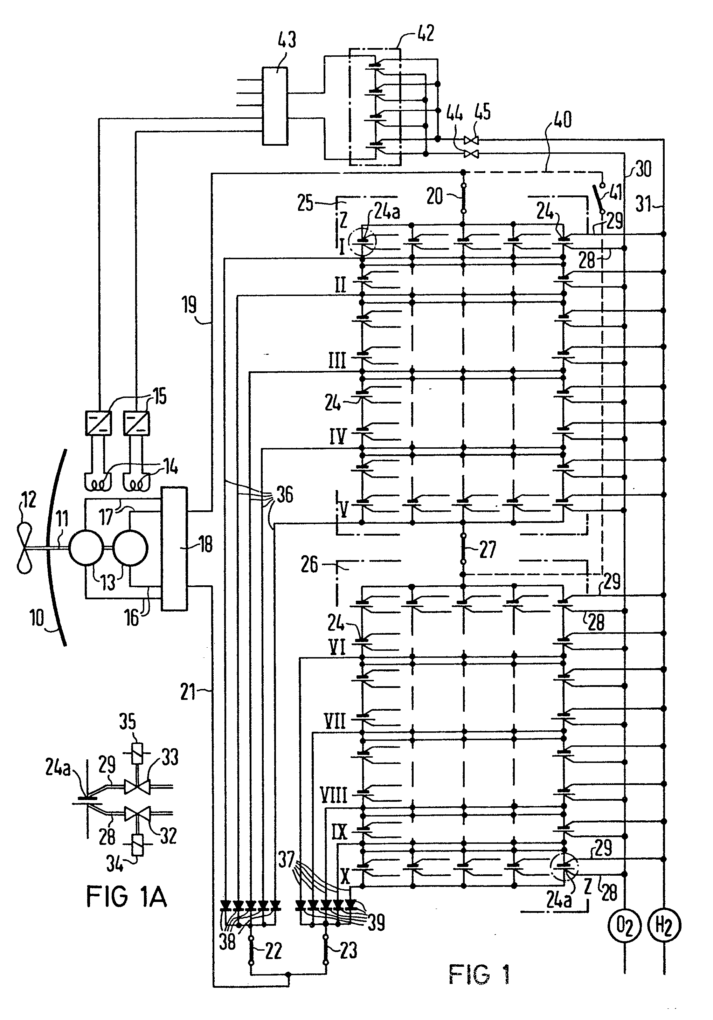

Wie in Fig. 1 schematisch dargestellt, ist durch die Außenhaut 10 eines Schiffes, beispielsweise eines Unterwasserfahrzeuges, die Antriebswelle 11 eines Propellers 12 geführt, die in üblicher Weise mit elektrischen Propellermotoren 13 verbunden ist. Die Erregerwicklungen 14 dieser Motoren sind über Erregerumformer 15 an eine Gleichstromquelle angeschlossen, wie nachfolgend noch näher erläutert wird.

Die Motoren 13 sind elektrisch über Leitungen 16 und 17 an eine — Schalteinrichtungen üblicher Art aufweisende — Schalttafel 18 angeschlossen, deren Schaltgeräte im normalen Fahrbetrieb nicht betätigt werden. Von der Schalttafel 18 führt eine Sammelschiene 19 zu einem Schalter 20 und eine Sammelschiene 21 zu Schaltern 22 und 23. An diese Schalter sind die Brennstoffzellen bzw. Brennstoffbatterien angeschlossen, die in Fig. 1 — vereinfacht — in Form von Stromquellen dargestellt und mit der Bezugsziffer 24 (bzw. 24a) bezeichnet sind. Wie in Fig. 1 angedeutet, sind die Brennstoffzellen bzw. Brennstoffbatterien, die im folgenden kurz als Brennstoffzelleneinheiten 24 bezeichnet werden, in zwei Gruppen zusammengefaßt. Diese beiden Gruppen sind aus Zweckmässigkeitsgründen in zwei separaten Räumen 25 und 26 installiert und können durch die Schalter 23 und 27 bzw. 20 und 22 elektrisch getrennt werden.

Der Übersichtlichkeit halber sind in Fig. 1 nicht alle Brennstoffzelleneinheiten 24 zeichnerisch dargestellt, sondern zum Teil nur angedeutet. Ebenso ist in Fig. 1 die eigene Gasversorgung der einzelnen Brennstoffzelleneinheiten 24 nur bei einigen Einheiten zeichnerisch dargestellt, bei den restlichen Einheiten ist sie nur angedeutet. Darüber hinaus sind in Fig. 1, ebenfalls der Übersichtlichkeit halber, auch die in den Gasversorgungsleitungen angeordneten steuerbaren Ventile nicht dargestellt. Diese Ventile können vielmehr Fig. 1A entnommen werden.

In Fig. 1A ist der mit Z bezeichnete Ausschnitt der Brennstoffzelleneinheiten 24a nach Fig. 1 vergrößert dargestellt. Jede Brennstoffzelleneinheit weist eine eigene Gasversorgung in Form der Gasversorgungsleitungen 28 und 29 auf. Die Gasversorgungsleitungen 28 und 29 sind an die Hauptleitungen 30 bzw. 31 (siehe Fig. 1), beispielsweise für Sauerstoff und Wasserstoff, angeschlossen. In den Gasversorgungsleitungen 28 und 29 sind Ventile 32 bzw. 33 samt den zugehörigen Steuerorganen 34 und 35 angeordnet. Die Ventile 32 und 33 können als mechanisch betätigbare Gasregelorgane, als elektrisch betätigbare Magnetventile oder als hydraulisch angetriebene Ventile ausgebildet sein.

Bei der Ausführungsform nach Fig. 1 sind jeweils fünf bzw. zehn Brennstoffzelleneinheiten 24 elektrisch zu Untergruppen zusammengefaßt, die mit I bis X bezeichnet sind ; insgesamt weist die Ausführungsform nach Fig. 1 achtzig Brennstoffzelleneinheiten 24 auf. Die Untergruppen sind untereinander in Reihe geschaltet, wobei eine aus den Untergruppen I bis V bestehende Gruppe von vierzig Brennstoffzelleneinheiten im Raum 25 und eine aus den Untergruppen VI bis X bestehende Gruppe von vierzig Brennstoffzelleneinheiten im Raum 26 untergebracht ist. Diese beiden Gruppen können, wie bereits ausgeführt, durch die Schalter 23 und 27 bzw. 20 und 22 elektrisch voneinander getrennt werden.

Die gleichpoligen Ausgänge der in Reihe geschalteten Untergruppen I bis V und VI bis X sind durch Leitungen 36 bzw. 37 — und über die Schalter 22 bzw. 23 — mit der gleichnamigen Sammelschiene 21 verbunden. In jeder der Leitungen 36 und 37 ist ein elektrisches Ventil 38 bzw. 39 angeordnet, beispielsweise eine Diode. Die Sammelschiene 21 ist, ebenso wie die Sammelschiene 19, mit der Schalttafel 18 verbunden. Die Sammelschiene 19 kann ferner auch, unter Umgehung der aus den Untergruppen I bis V bestehenden Gruppe von Brennstoffzelleneinheiten, durch eine Leitung 40 direkt mit der aus den Untergruppen VI bis X bestehenden Gruppe von Brennstoffzelleneinheiten verbunden sein, wobei in der Leitung 40 ein Schalter 41 angeordnet ist.

Zur Einstellung gewünschter Solldrehzahlen werden bei dem in Fig. 1 dargestellten Schiffsantrieb, entsprechend dem Zeitverhalten, dem Leistungsvermögen und dem thermischen Zustand der Anlage, die Brennstoffzelleneinheiten 24 nacheinander aktiviert, bis die Fahrtstufe, in der die gewünschte Drehzahl n liegt, erreicht ist.

Soll der Antrieb des Schiffes bzw. des Unterwasserfahrzeuges beispielsweise aus dem Stillstand auf die Drehzahl $n_4$ im Bereich der Fahrtstufe IV gebracht werden, so werden über die Reaktantenventile 32 und 33 alle Brennstoffzelleneinheiten 24 der Untergruppe I an die Hauptleitungen 30 und 31 für Sauerstoff bzw. Wasserstoff angeschlossen. Das Erregersystem der Motoren 13 wird über die Erregerumformer 15 und die Erregerwicklungen 14 auferregt.

Die Erregerumformer 15 können vorteilhaft aus einer separaten Brennstoffzellenanlage 42 versorgt werden, die beispielsweise vier Brennstoffzelleneinheiten umfaßt. Die Erregerumformer 15 sind dazu über eine Schalttafel 43 mit der Brennstoffzellenanlage 42 verbunden. Über die Schalttafel 43 können an die Brennstoffzellenanlage 42 auch noch weitere Abnehmer angeschlossen sein. Gasseitig ist die Brennstoffzellenanlage 42 — über Ventile 44 und 45 — an die Hauptleitungen 30 und 31 für Sauerstoff bzw. Wasserstoff angeschlossen. Entsprechend ihrem Verwendungszweck arbeitet die Brennstoffzellenanlage 42 mit annähernd konstanter Ausgangsspannung.

Entsprechend dem Brennstoffzellenübergangsverhalten beginnt nun ein Strom zu fließen, und zwar von den Brennstoffzelleneinheiten der Untergruppe I über die Leitung 36 samt der Diode 38, den Schalter 22 und die Sammelschiene 21 zur Schalttafel 18 und den Motoren 13 und von dort über die Sammelschiene 19 und den Schalter 20 zurück zu den Brennstoffzelleneinheiten der Untergruppe I. Nach dem Anlaufen der Motoren wird die Drehzahl durch Feldschwächung derart erhöht, daß nach einer gewissen Zeit die zusätzliche Aktivierung der Brennstoffzelleneinheiten der Untergruppe II ermöglicht wird (« gasseitige Schaltung »).

Nach dem Aufbau der Spannung in den Brennstoffzelleneinheiten der Untergruppe II wird die Diode 38 in der zu dieser Untergruppe gehörenden Leitung 36 in Strömungsrichtung durchlässig, da sie in Durchlaßrichtung das höhere positive Potential aufweist. Dadurch wird der Strom auf die Brennstoffzelleneinheiten der Untergruppe II und die genannte Diode kommutiert ; die Diode 38 in der zur Untergruppe I gehörenden Leitung 36 sperrt und verhindert somit einen Kurzschluß der Untergruppe II.

Der weitere Hochlaufvorgang erfolgt in analoger Weise, bis die gewünschte Fahrtstufe erreicht ist. Die Drehzahlfeinjustierung und -regelung innerhalb dieser Fahrtstufe erfolgt dann durch Feldverstellung, d. h. durch eine Erregerstromeinstellung über die Erregerumformer 15. Nach Erreichen der zur gewünschten Drehzahl gehörenden Geschwindigkeit (stationärer Zustand) können innerhalb der aktivierten Untergruppen von Brennstoffzelleneinheiten gasseitig soviele parallel liegende Einheiten herausgeschaltet werden, bis die verbleibenden Brennstoffzelleneinheiten zusammen mit dem Schiffsantriebsmotorsystem — unter Berücksichtigung aller außenliegenden Hilfseinrichtungen — im Wirkungsgradoptimum arbeiten können (optimaler Gesamtanlagenwirkungsgrad).

Mit der in Fig. 1 dargestellten Ausführungsform der erfindungsgemäßen Gleichstromquelle einschließlich der Schaltanlage lassen sich insbesondere auch folgende Aufgaben erfüllen :

Anlagenschutz

Havarieschaltungen und Redundanzschaltungen

Sonderprogramme im Zusammenhang mit Schnell-Stop-Manövern und Umsteuermanövern (wobei nicht alle erforderlichen Komponenten zeichnerisch dargestellt sind)

Warmfahren der Brennstoffzellenanlage.

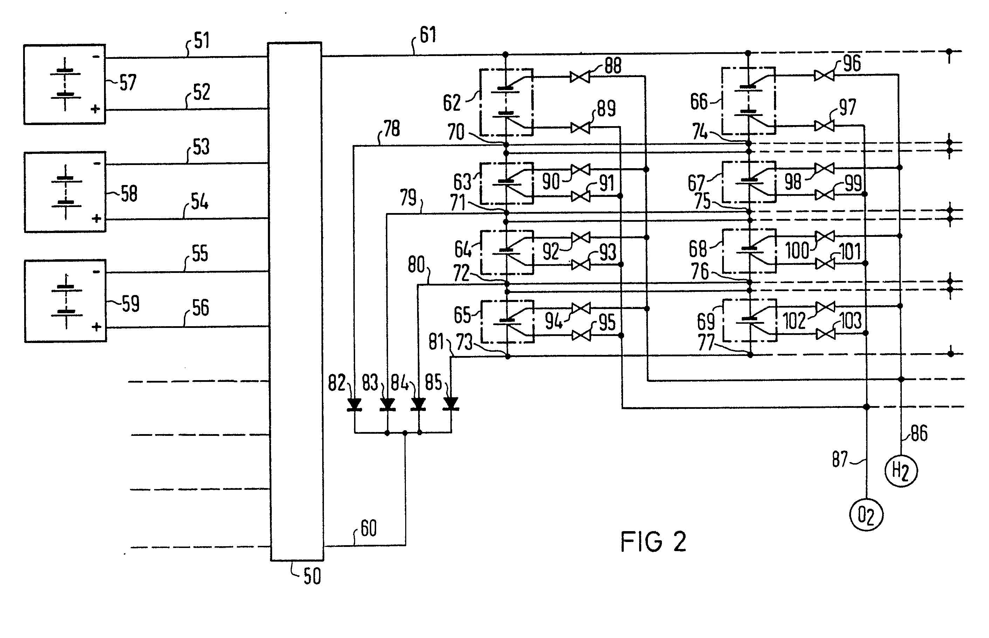

In Fig. 2 ist eine Ausführungsform der erfindungsgemäßen Gleichstromquelle dargestellt, die zum Laden von Sekundärbatterien dient. Hierbei sind an eine Gleichstromschaltanlage 50 der Batterieladestation mittels elektrischer Verbindungen 51 bis 56 die zu ladenden Sekundärbatterien 57 bis 59 angeschlossen, bei denen es sich beispielsweise um Bleibatterien oder Batterien anderer Technologien handelt, die für die Elektrotraktion geeignet sind. Die Anzahl der Batterien, die gleichzeitig geladen werden können, richtet sich nach den elektrischen Verhältnissen der Gesamtanordnung sowie nach den Anforderungen bezüglich der Ladezeit.

Mittels Sammelschienen 60 und 61 sind an die Gleichstromschaltanlage 50 acht Brennstoffzelleneinheiten 62 bis 69 angeschlossen. Diese Brennstoffzelleneinheiten sind in zwei — parallel zueinander geschalteten — Gruppen zusammengefaßt, die die Einheiten 62 bis 65 bzw. 66 bis 69 umfassen. Innerhalb der beiden Gruppen sind die Brennstoffzelleneinheiten elektrisch in Serie geschaltet. Die Anzahl von parallel geschalteten Gruppen kann, wie in Fig. 2 angedeutet, beliebig erweitert werden. Dasselbe gilt im übrigen auch für die innerhalb einer Gruppe in Reihe geschalteten Brennstoffzelleneinheiten.

Die gleichpoligen Ausgänge 70 bis 77 der in Reihe geschalteten Brennstoffzelleneinheiten sind mittels elektrischer Verbindungsleitungen 78 bis 81 an die gleichnamige Sammelschiene 60 angeschlossen. In den Verbindungsleitungen ist jeweils ein elektrisches Ventil angeordnet. Als elektrische Ventile, die in Fig. 2 mit den Bezugsziffern 82 bis 85 bezeichnet sind, werden dabei Dioden verwendet. Gasseitig sind die Brennstoffzelleneinheiten 62 bis 69 an die Gashauptleitungen 86 und 87 für Wasserstoff bzw. Sauerstoff der Gesamtanlage angeschlossen, wobei in den Gasversorgungsleitungen zu den einzelnen Brennstoffzelleneinheiten steuerbare Ventile 88 bis 103 angeordnet sind.

Die Zuschaltung bzw. Abschaltung der Brennstoffzelleneinheiten 62 bis 69 während des Ladevorganges erfolgt durch Öffnen bzw. Schließen der — zu den jeweiligen Einheiten gehörenden — steuerbaren Ventile in den Gasversorgungsleitungen, und zwar nach den elektrischen Bedingungen der Ladekennlinien der jeweiligen Batterien. Die Steuerbefehle für die Ventile in den Gasversorgungsleitungen stammen beispielsweise von einer Ladeautomatik. Die Einstellung des Ladespannungsbereiches erfolgt dabei über die Ansteuerung einer entsprechenden Anzahl in Reihe geschalteter Brennstoffzelleneinheiten. Die Ladeströme werden primär durch die Anzahl parallel geschalteter Einheiten variiert. Annähernd konstante Ladeströme können durch Zuschalten von in Reihe liegenden Einheiten im Verlauf des Ladevorganges erreicht werden.

Beim Ladevorgang sind beispielsweise die Brennstoffzelleneinheiten 62, 63, 66 und 67 über die zugehörigen steuerbaren Ventile 88 bis 91 und 96 bis 99 eingeschaltet. Der Stromkreis ist dann über folgenden Pfad geschlossen : Von den Brennstoffzelleneinheiten 62 und 63 samt den parallel geschalteten Einheiten 66 und 67 über die elektrische Verbindungsleitung 79, die Diode 83 und die Sammelschiene 60 zu der Schaltanlage 50 ; von der Schaltanlage 50 über die parallel geschalteten Ladekabel 52, 54 und 56 zu den Batterien 57 bis 59 und von dort über die Ladekabel 51, 53 und 55 zurück zur Schaltanlage 50 ; von der Schaltanlage 50 aus schließt sich dann der Stromkreis über die Sammelschiene 61 zu den Brennstoffzelleneinheiten 62, 63, 66 und 67. Im übrigen fließt der Ladestrom jeweils über dasjenige der elektrischen Ventile 82 bis 85, das in Durchlaßrichtung die höchste Spannung aufweist.

### Patentansprüche

1. Elektrische Gleichstromquelle mit in Reihe oder in Reihe und parallel geschalteten Brennstoffzellen oder Brennstoffbatterien, dadurch gekennzeichnet, daß jede Brennstoffzelle bzw. Brennstoffbatterie eine eigene Gasversorgung aufweist und in allen Gasversorgungsleitungen steuerbare Ventile angeordnet sind und daß jeweils gleichpolige Ausgänge der in Reihe geschalteten Brennstoffzellen bzw. Brennstoffbatterien über ein elektrisches Ventil mit einer gleichnamigen Sammelschiene verbunden sind.

2. Gleichstromquelle nach Anspruch 1, dadurch gekennzeichnet, daß die elektrischen Ventile als Dioden ausgebildet sind.

3. Gleichstromquelle nach Anspruch 1, dadurch gekennzeichnet, daß die elektrischen Ventile steuerbar ausgebildet sind.

### Claims

1. A d. c. electric source with fuel cells or fuel batteries connected in series, or in series and in parallel, characterised in that each fuel cell or fuel battery has its own gas supply and all the gas supply lines contain controllable valves, and that like-poled outputs of series connected fuel cells or fuel batteries are connected via an electric control element to a like-named busbar.

2. A d. c. source as claimed in Claim 1, characterised in that the electric control elements are diodes.

3. A d. c. source as claimed in Claim 1, characterised in that the electric control elements are themselves controllable.

### Revendications

1. Source électrique de courant continu comportant des piles ou des batteries à combustible branchées en série ou branchées en série et en parallèle, caractérisée par le fait que chaque pile ou batterie à combustible comporte une alimentation séparée en gaz et que des vannes commandables sont disposées dans toutes les canalisations d'alimentation en gaz et que des sorties respectives de même polarité des piles ou batteries à combustible, branchées en série, sont reliées par l'intermédiaire d'une valve électrique à une barre omnibus correspondante.

2. Source de courant continu suivant la revendication 1, caractérisée par le fait que les valves électriques sont réalisées sous la forme de diodes.

3. Source de courant continu suivant la revendication 1, caractérisée par le fait que les valves électriques sont réalisées de manière à être commandables.

FIG 1A

FIG 1

FIG 2